# EUROPÄISCHE PATENTANMELDUNG

(11) **EP 1 398 483 A2**
(43) Veröffentlichungstag der Anmeldung: **17.03.2004**
(21) Anmeldenummer: 03017825.5
(22) Anmeldetag: 05.08.2003
(51) Int. Cl.: F02D 41/14, F02D 41/40, F02D 35/00, F02D 41/00

(54) **Verfahren und Vorrichtung zur Steuerung einer Brennkraftmaschine mit verminderterter Schadstoffemission**

(30) Priorität: 03.09.2002 DE 10240485; 25.07.2003 DE 10333933
(71) Anmelder: ROBERT BOSCH GMBH, 70442 Stuttgart (DE)
(72) Erfinder: Buck, Manfred, 71732 Tamm (DE); Birk, Manfred, 71739 Oberriexingen (DE); Bleile, Thomas, 70435 Stuttgart (DE); Forthmann, Stefan, 71640 Ludwigsburg (DE)

(57) **Zusammenfassung**

Es werden eine Vorrichtung und ein Verfahren zur Steuerung einer Brennkraftmaschine (100) beschrieben, bei denen Emissionen der Brennkraftmaschine (100) im Abgas erfasst werden, und abhängig von dem Vergleich der erfassten Emissionen mit einem Sollwert (SP, SN) eine für die Verbrennung in der Brennkraftmaschine (100) beeinflussende Stellgröße korrigiert wird.

## Beschreibung

### Stand der Technik

Die Erfindung betrifft ein Verfahren und eine Vorrichtung zur Steuerung einer Brennkraftmaschine.

Aus der DE 39 25 877 A1 sind ein Verfahren und eine Vorrichtung zur Steuerung einer Brennkraftmaschine bekannt geworden, bei denen in bestimmten Betriebszuständen der Brennkraftmaschine, insbesondere wenn sich die Brennkraftmaschine im Stationärbetrieb befindet, die Sauerstoffkonzentration des Abgases mit einem Sollwert verglichen und eine Adaption einer höchstzulässigen Kraftstoffmenge ausgehend von der Differenz zwischen Soll- und Istwert vorgenommen wird. Dabei ist vorgesehen, dass die höchstzulässige Kraftstoffmenge, die in einem Kennfeld abgelegt ist, multiplikativ und/oder additiv korrigiert bzw. die Kennfeldwerte entsprechend modifiziert werden.

### Vorteile der Erfindung

Dadurch, dass Emissionen der Brennkraftmaschine im Abgas erfasst werden und abhängig von dem Vergleich der erfassten Emissionen mit einem Sollwert eine die Verbrennung der Brennkraftmaschine beeinflussende Stellgröße korrigiert wird, ist eine wesentliche genauere Steuerung der Brennkraftmaschine und dadurch eine deutliche Verminderung Schadstoff-Emissionen möglich. Als Stellgrößen werden insbesondere Größen verwendet, welche die Luftzufuhr und/oder die Kraftstoffzumessung beeinflussen.

Gemäß Ausgestaltungen ist vorgesehen, dass die Luftzufuhr über Stellelemente beeinflusst wird, welche beispielsweise auf eine Abgasrückführrate ARFR, auf einen Turbolader oder auf Mitteln zum Androsseln der Frischluftmenge einwirken.

Die Stellelemente zur Beeinflussung der Kraftstoffzumessung legen im wesentlichen den Beginn und/oder die Dauer wenigstens einer Haupteinspritzung fest. Desweiteren kann vorgesehen sein, dass diese Steller die Voreinspritzmenge und die Nacheinspritzmenge beeinflussen.

Gemäß einer Ausgestaltung ist vorgesehen, dass die Eingriffe in die Steuerung der Brennkraftmaschine zylinderspezifisch erfolgen. Mit dieser Maßnahme kann der Emissionsbeitrag jedes einzelnen Zylinders gezielt beeinflusst werden.

Als Emissionen werden bevorzugt die Stickoxid-Konzentration und/oder die Partikel-Konzentration im Abgas erfasst.

Die Erfindung wird nachstehend anhand der in der Zeichnung dargestellten Ausführungsformen erläutert.

### Zeichnung

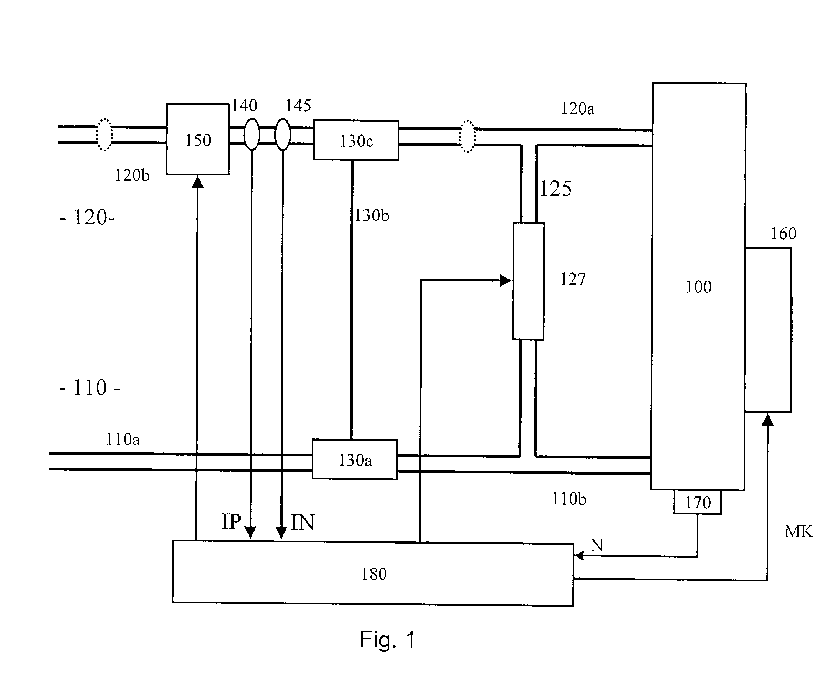

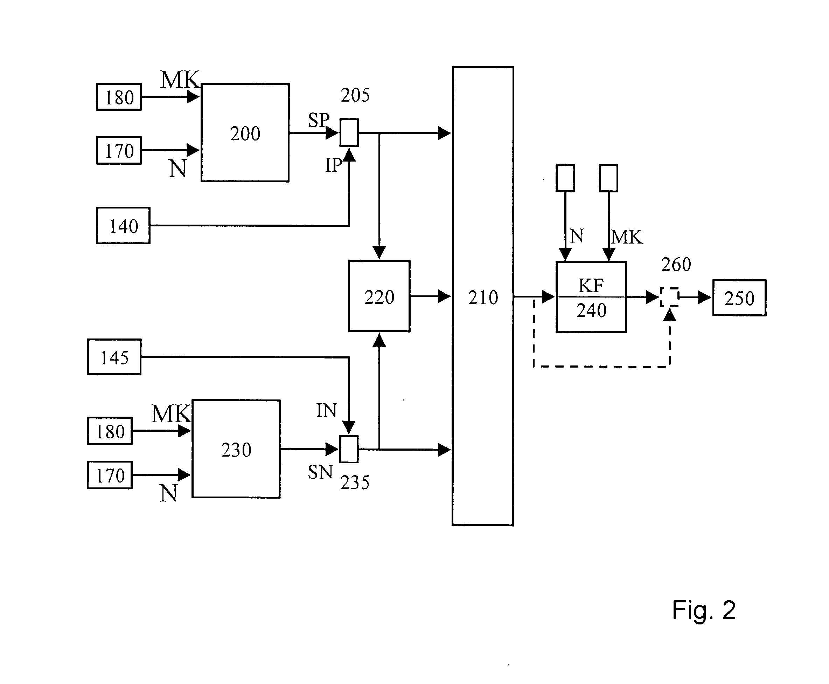

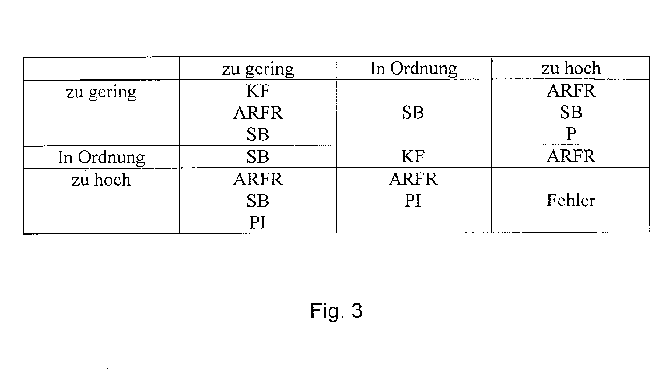

Figur 1 zeigt ein System zur Steuerung einer Brennkraftmaschine, Figur 2 zeigt ein Blockdiagramm einer erfindungsgemäßen Vorgehensweise und Figur 3 zeigt eine Tabelle.

### Beschreibung der Ausführungsbeispiele

In Figur 1 ist ein System zur Steuerung einer mehrzylindrigen Brennkraftmaschine 100 dargestellt. Der Brennkraftmaschine 100 wird über den Luftzufuhrbereich 110 Luft zugeführt. Der Luftzufuhrbereich 110 enthält einen ersten Luftzufuhr-Teilbereich 110a und einen zweiten Luftzufuhr-Teilbereich 110b. Über einen Abgasbereich 120 gelangt das Abgas von der Brennkraftmaschine 100 in die Umwelt. Der Abgasbereich 120 enthält einen ersten Abgas-Teilbereich 120a und einen zweiten Abgas-Teilbereich 120b.

Zwischen dem Luftzufuhrbereich 1 10 und dem Abgasbereich 120 ist eine Rückführleitung 125 angeordnet, die ein Stellelement 127 enthält, mit dem eine Abgasrückführrate ARFR beeinflussbar ist.

Im Luftzufuhrbereich 110 ist ein Verdichter 130a angeordnet, der über eine Welle 130b mit einer im Abgasbereich 120 angeordneten Turbine 130c in Wirkverbindung steht. Der Verdichter 120a, die Welle 120b und die Turbine 120c bilden einen Abgasturbolader.

Im zweiten Abgas-Teilbereich 120b ist ein Abgasnachbehandlungssystem 150 angeordnet, das wenigstens einen Partikelfilter und/oder wenigstens einen Katalysator enthält.

Im Abgasbereich 120 ist wenigstens ein erster Sensor 140 angeordnet, der Emissionen der Brennkraftmaschine 100 im Abgas erfasst. Der erste Sensor 140 gibt ein Ausgangssignal IP an ein Steuergerät 180 ab. Verschiedene Möglichkeiten zur Anordnung des ersten Sensors 140 sind punktiert eingezeichnet. Weiterhin kann im Abgasbereich 120 ein zweiter Sensor 145 angeordnet sein, der ebenfalls Emissionen der Brennkraftmaschine 100 im Abgas erfasst. Der zweite Sensor 145 gibt ein Ausgangssignal IN an das Steuergerät 180 ab. Bevorzugt werden Sensoren 140, 145 eingesetzt, die Signale bereitstellen, die direkt oder indirekt die Emissionen charakterisieren.

Der vorzugsweise mehrzylindrigen Brennkraftmaschine 100 ist ein Kraftstoffsteller 160 zugeordnet, der abhängig von einem Ansteuersignal MK, welches das Steuergerät 180 bereitstellt, Kraftstoff zu bestimmten Zeitpunkten für bestimmte Zeitdauern zumisst

An der Brennkraftmaschine 100 ist ein dritter Sensor 170 angeordnet, der ein Drehzahlsignal N bereitstellt, welches dem Steuergerät 180 zugeleitet ist. Das Steuergerät 180 beaufschlagt den Kraftstoffsteller 160 und das Stellelement 127 sowie das Abgasnachbehandlungssystem 150 mit entsprechenden Ansteuersignalen.

Die Turbine 130c wird vom Abgasstrom angetrieben. Die Turbine 130c treibt über die Welle 130b den Verdichter 130a an. Der Verdichter 130a verdichtet die Luft, die über den ersten Luftzufuhr-Teilbereich 110a zur Brennkraftmaschine 100 strömt. Über die Rückführleitung 125 gelangt zusätzlich Abgas aus dem ersten Abgas-Teilbereich 120a in den zweiten Luftzufuhr-Teilbereich 110b. Mittels des als Abgasrückführventil ausgestalteten Stellelements 127, ist die Abgasrückführrate ARFR einstellbar. Neben diesem Stellelement 127 können auch weitere Stellelemente bzw. weitere Bauelemente vorgesehen sein, mit denen die Funktion der Abgasrückführung gewährleistet wird und/oder mit denen der Anteil an rückgeführtem Abgas steuerbar ist. Ferner können Stellelemente vorgesehen sind, die direkt die zugeführte Luftmenge bestimmen.

Mittels des Abgasnachbehandlungssystems 150 können die Emissionen, die in die Umwelt gelangen, deutlich reduziert werden. Das Abgasnachbehandlungssystem 150 kann beispielsweise einen Partikelfilter umfassen, der die Partikel ausfiltert, die im Abgas enthalten sind. In einem Sonderbetriebszustand, in welchem der Partikelfilter regeneriert wird, werden diese Partikel oxidiert bzw. verbrannt. Des weiteren kann ein Katalysator, insbesondere ein Stickoxidkatalysator, vorgesehen sein, der die Stickoxidemissionen reduziert.

Mittels des Kraftstoffstellers 160 wird die Kraftstoffeinspritzung in die vorzugsweise mehrzylindrige Brennkraftmaschine 100 gesteuert. Vorteilhafterweise ist vorgesehen, dass neben wenigstens einer zylinderspezifischen Haupteinspritzung, die im wesentlichen das von der Brennkraftmaschine 100 abgegebenen Moment bestimmt, zusätzlich wenigstens eine zylinderspezifische Voreinspritzung und wenigstens eine zylinderspezifische Nacheinspritzung erfolgen. Mittels der Voreinspritzung wird hauptsächlich die Geräuschemission reduziert. Die Nacheinspritzung dient hauptsächlich zur Abgaskonditionierung, insbesondere erfolgt eine Nacheinspritzung im Regenerationsbetrieb des Katalysators bzw. des Partikelfilters.

Eine entsprechende Ansteuerung der Stellelemente erfolgt vorzugsweise durch das Steuergerät 180, das hierzu die von den Sensoren 140, 145, 170 bereitgestellten Signale IP, IN, N bzw. weitere nicht näher beschriebene Sensorsignale ausgewertet.

Erfindungsgemäß ist zunächst vorgesehen, dass der im Abgasbereich 120 angeordnete erste und/oder zweite Sensor 140, 145 Emissionen der Brennkraftmaschine 100 im Abgas zylinderspezifisch erfasst. Der erste und/oder der zweite Sensor 140, 145 erfasst für jeden Zylinder der Brennkraftmaschine 100 getrennt Schadstoffe wie beispielsweise Partikel, Stickoxide, unverbrannte Kohlenwasserstoffe und/oder andere Schadstoffe, die im Abgas nicht erwünscht sind und/oder auf einen möglichst kleinen Anteil eingestellt werden sollen.

Der erste und/oder zweite Sensor 140, 145 ist vorzugsweise im zweiten Abgas-Teilbereich 120b nach der Turbine 130c und vor dem Abgasnachbehandlungssystem 150 angeordnet. Der erste und/oder zweite Sensor 140, 145 können aber auch nach dem Abgasnachbehandlungssystem 115 angeordnet sein. In diesem Fall müssen geeignete Maßnahmen und Elemente vorgesehen sein, um die Funktionsfähigkeit des Verfahrens zu gewährleisten. So kann beispielsweise vorgesehen sein, dass das beschriebene Verfahren nur in bestimmten Betriebszuständen erfolgt, in denen das Abgasnachbehandlungssystem 115 nicht wirkt. Alternativ kann vorgesehen sein, dass ein Bypass vorgesehen, der die Abgase am Abgasnachbehandlungssystem 115 vorbeileitet. Dabei kann ein steuerbarer Bypass vorgesehen sein, der in bestimmten Betriebszuständen, wenn die Messung erfolgt, die Abgase am Abgasnachbehandlungssystem 115 vorbeileitet.

Des weiteren ist es auch möglich, den ersten und/oder den zweiten Sensor 140, 145 vor der Turbine 130c anzuordnen.

Die erfindungsgemäße Vorgehensweise ist auch auf Systeme ohne Abgasturbolader 130, also ohne Verdichter 130a und ohne Turbine 130c anwendbar. Des weiteren können neben dem Stellelement 127 noch weitere Stellelemente vorgesehen sein, welche die der Brennkraftmaschine 110 zugeführte Luftmenge beeinflussen. Hierbei handelt es sich vorzugsweise um eine nicht näher gezeigte Drosselklappe, die beispielsweise im ersten Luftzufuhr-Teilbereich 110a angeordnet ist.

Erfindungsgemäß ist vorgesehen, dass wenigstens eine Emission mittels des ersten und oder zweiten Sensors 140, 145 zylinderspezifisch erfasst wird und bei einer Abweichung von einem Konzentrationswert, der auf eine nicht optimierte Verbrennung hindeutet, eine Optimierung der Verbrennung möglichst in jedem einzelnen Zylinder der Brennkraftmaschine 100 durchgeführt wird.

Hierzu ist vorzugsweise vorgesehen, dass eine Stellgröße entsprechend korrigiert wird. Insbesondere ist dies eine Stellgröße, welche die Kraftstoffeinspritzung oder die der Brennkraftmaschine 100 zugeführte Luftmenge beeinflusst. Mittels der Messung der entsprechenden Emissionen ist es möglich, Unzulänglichkeiten bei der Verbrennung, insbesondere bei der Kraftstoffzumessung, der Luftzufuhr oder bei der Abgasrückführung zu erkennen, und die Stellgrößen für jeden einzelnen Zylinder der Brennkraftmaschine 100 entsprechend zu korrigieren. Die Zuordnung der Fehlerbereiche erfolgt dabei über eine Logikfunktion, die vorzugsweise auf Kennfeldern oder modellbasierten Daten beruht, die das Verhältnis der Emissionswerte analysiert.

Da die Emissionen zylinderspezifisch direkt das Ergebnis der Verbrennung sind, werden Toleranzen gegenüber indirekten Messungen, die beispielsweise die Luftmenge, den Einspritzbeginn und/oder den Körperschall erfassen, minimiert. Mit der erfindungsgemäßen Vorgehensweise können die Abgasemissionen deutlich reduziert werden. Des weiteren können die verwendeten Sensoren 140, 145 für andere Aufgaben verwendet werden. Beispielsweise können diese Sensoren 140, 145 zur Überwachung und/oder Regelung des Abgasnachbehandlungssystems 150 verwendet werden.

Erfindungsgemäß ist vorgesehen, dass eine Logik, der als Eingangsgrößen wenigstens die emissionsrelevanten Größen zugeführt werden, erkennt, ob die Verbrennung optimal verläuft und die damit verbundenen Einflussgrößen zylindergenau eingeregelt sind. Bei Abweichung vom optimalen Verhalten entscheidet die erfindungsgemäße Logik, ob eine Nachregelung der oben beschriebenen Einflussgrößen durchgeführt werden soll und führt diese durch. Tritt eine solche Abweichung auf, werden die Sensorsignale als Istwert einer Regelung zugeführt und mit Sollwerten verglichen. Vorzugsweise sind die Sollwerte abhängig von der Drehzahl N, dem Beginn der Haupteinspritzung, der Haupteinspritzmenge, der Voreinspritzmenge und/oder der Nacheinspritzmenge vorgebbar. Bei besonders vorteilhaften Ausgestaltungen kann auch vorgesehen sein, dass noch weitere Betriebsparameter, wie beispielsweise verschiedene Temperatur und Druckwerte, erfasst werden. Bevorzugt sind dies die Temperatur der Brennkraftmaschine 100 und/oder die Umgebungstemperatur. Ein Regler bestimmt dann einen Korrekturwert zur Korrektur der Stellgröße der entsprechenden Stellelemente.

Eine entsprechende Vorgehensweise ist beispielhaft in Figur 2 dargestellt. Bereits in Figur 1 beschriebene Elemente sind mit entsprechenden Bezugszeichen bezeichnet. In einem ersten Kennfeld 200 ist ein Partikel-Sollwert SP für die Partikelemission abgelegt. Dem ersten Kennfeld 200 wird das Ausgangssignal N des Drehzahlsensors 170 und das Steuersignal MK, das von der Steuerung 180 bereitgestellt wird, zugeführt. Neben diesen Größen können auch weitere Größen vorgesehen sein. Der Partikel-Sollwert SP gelangt zu einem ersten Verknüpfungspunkt 205, an dessem zweiten Eingang das Ausgangssignal IP des ersten Sensors 140 anliegt, der im Ausführungsbeispiel als Partikel-Sensor ausgestaltet ist. Das Ausgangssignal des ersten Verknüpfungspunkts 205, der die Differenz der beiden Signale bildet, gelangt sowohl zu einem Regler 210 als auch zu einer Logik 220.

Ein zweites Kennfeld 230, in welchem ein Stickoxid-Sollwert SN für die Stickoxidkonzentration abgelegt ist, wird mit den gleichen Signalen wie das erste Kennfeld 200 beaufschlagt. Der Stickoxid-Sollwert SN des zweiten Kennfeldes 230 gelangt zu einem zweiten Verknüpfungspunkt 235, an dessem zweiten Eingang das Ausgangssignal IN das des zweiten Sensors 145 anliegt, der im Ausführungsbeispiel als Stickoxid-Sensor ausgebildet ist.

Das Ausgangssignal des zweiten Verknüpfungspunktes 235, der ebenfalls die Differenz der beiden Signale bildet, gelangt ebenfalls zur Logik 220 und zu dem Regler 210.

Mit dem Ausgangssignal des Reglers 210 wird vorzugsweise eine Steuerung 240 beaufschlagt, die abhängig von verschiedenen Eingangsgrößen wie beispielsweise der Drehzahl N und dem Ansteuersignal MK Ansteuersignale für verschiedene Stellelemente 250 bildet. Hierzu werden üblicherweise Kennfelder verwendet. Ein solches Kennfeld KF ist in der Steuerung 240 eingetragen.

Bei einer ersten Ausführungsform ist vorgesehen, dass das Kennfeld KF der Steuerung 240 abhängig von dem Ausgangssignal des Reglers 210 verändert, d.h. adaptiert wird. Alternativ kann auch vorgesehen sein, dass das Ausgangssignal des Reglers 210 in einem dritten Verknüpfungspunkt 260 mit dem Ausgangssignal der Steuerung 240 verknüpft wird. Hierbei kann eine additive und/oder eine multiplikative Verknüpfung vorgesehen sein.

In der dargestellten Ausführungsform sind der erste und zweite Sensor 140, 145 vorgesehen, wobei der erste Sensor 140 beispielsweise als Partikel-Sensor und der zweite Sensor 145 beispielsweise als Stickoxid-Sensor ausgestaltet ist. Die erfindungsgemäße Vorgehensweise ist grundsätzlich auch mit einem oder mehr als zwei entsprechenden Sensoren, die Emissionen erfassen, durchführbar.

In der dargestellten Ausführungsform wird der Logik 220 die Regelabweichung, d.h. die Differenz zwischen dem Sollwert und dem Istwert für die Emissionswerte zugeführt. Alternativ kann auch vorgesehen sein, dass die Logik direkt das Signal des oder der Sensoren 140, 145, welche die Emissionen erfassen, zugeleitet wird.

Die Logik 220 überprüft, ob die Emissionen zu gering, zu hoch oder in einem vorgegebenen Bereich liegen. Abhängig davon, in welchem dieser drei Bereiche die entsprechenden Sensorsignale liegen, werden entsprechende zylinderspezifische Maßnahmen eingeleitet.

Diese Maßnahmen sind in der in Figur 3 wiedergegebenen Tabelle dargestellt. In der Tabelle sind die Verhältnisse mit einem Partikel-Sensor als erstem Sensor 140 und einem Stickoxid-Sensor als zweitem Sensor 145 dargestellt. Die erfindungsgemäße Vorgehensweise ist nicht auf die Verwendung dieser beiden Sensoren 140, 145 beschränkt, sie kann auch mit lediglich einem der Sensoren 140, 145 durchgeführt werden, wobei dann davon ausgegangen wird, dass das Signal des anderen Sensors in Ordnung ist. Des weiteren können noch weitere Sensoren vorgesehen sein, wobei die Tabelle dann entsprechend zu ergänzen ist. Alternativ können auch anstelle eines Partikel-Sensors andere Sensoren, die Emissionen erfassen, wie beispielsweise ein Kohlenwasserstoff-Sensor, verwendet werden.

In der Tabelle sind in den Spalten die Verhältnisse für einen Zustand des als Stickoxid-Sensor ausgebildeten zweiten Sensors 145 und in den Zeilen die Verhältnisse für einen Zustand des als Partikel-Sensor ausgebildeten ersten Sensors 140 aufgetragen. In der ersten Spalte sind die Maßnahmen für eine zu geringe Stickoxidemission, in der rechten Spalte die Maßnahmen bei einer zu hohen und in der mittleren Spalte die Maßnahme bei einer optimalen Stickoxidemission dargestellt. Die mittlere Spalte wird vorzugsweise dann verwendet, wenn die Abweichung zu dem Sollwert der Stickoxidemissionen kleiner als ein vorgegebener Wert ist. Sind die Stickoxidemissionen um den vorgegebenen Wert größer als der Stickoxid-Sollwert SN, d.h. sie sind zu hoch, so werden die Maßnahmen durchgeführt, die in der rechten Spalte aufgetragen sind,. Sind die Stickoxidemissionen um den vorgegebenen Wert geringer als der Stickoxid-Sollwert SN, so werden die in der linken Spalte aufgeführten Maßnahmen durchgeführt.

Weichen die Partikelemissionen weniger als ein vorgegebener Wert von dem Partikel-Sollwert SP ab, so wird die mittlere Zeile verwendet. Sind die Partikelemissionen um den vorgegebenen Wert geringer als der Partikel-Sollwert SP, so werden die in der ersten Zeile dargestellten Maßnahmen getroffen und sind sie um den vorgegebenen Wert größer als der Partikel-Sollwert SP, so werden die in der unteren Zeile angeführten Maßnahmen durchgeführt.

Sind sowohl die Stickoxidemissionen als auch die Partikelemissionen zu gering, so werden die in Kennfeld KF der Steuerung 240 abgelegten Werte verwendet. Bei einer verbesserten Ausführungsform kann auch vorgesehen sein, dass diese Werte in Richtung einer Verbrauchsoptimierung verändert werden, d.h. beispielsweise dass die Abgasrückführrate ARFR verringert und/oder der Spritzbeginn SB nach früh verstellt wird.

Sind die Werte der Stickoxidemissionen im Bereich des Stickoxid-Sollwerts SN und die Partikelemissionen zu gering, wird eine Verbrauchsoptimierung der Werte durchgeführt, beispielsweise wird der Spritzbeginn SB nach früh verstellt.

Sind die Stickoxidemissionen zu hoch und die Partikelemissionen zu gering, so werden Maßnahmen zur Verringerung der Stickoxidemissionen getroffen, bei denen eine Erhöhung der Partikelemissionen toleriert werden. So wird beispielsweise die Abgasrückführrate ARFR erhöht, der Einspritzbeginn SB in Richtung spät verstellt und/oder der Kraftstoffdruck P verringert. Beim Commonrail-System wird der Raildruck verringert.

Sind die Partikelemissionen in Ordnung und die Stickoxidemissionen zu gering, so wird ebenfalls eine Verbrauchsoptimierung durchgeführt, vorzugsweise wird der Spritzbeginn SB in Richtung früh verstellt.

Sind sowohl die Stickoxidemissionen als auch die Partikelemissionen in Ordnung, so werden alle Kennfelder KF ohne Korrektur verwendet.

Sind die Partikelemissionen in Ordnung und die Stickoxidemissionen zu hoch, so wird insbesondere die Abgasrückführrate ARFR korrigiert, dass der Anteil an rückgeführten Abgasen erhöht wird.

Sind die Partikelemissionen zu hoch und die Stickoxidemissionen zu gering, so werden Maßnahmen eingeleitet, welche die Partikelemissionen reduzieren, wobei in Kauf genommen wird, dass die Stickoxidemissionen ansteigen. Hierbei ist insbesondere vorgesehen, dass der Steller zur Steuerung der Abgasrückführrate ARFR derart angesteuert wird, dass weniger Abgas rückgeführt wird, der Spritzbeginn SB wird in Richtung früh verstellt und/oder die Kraftstoffmenge PI, die bei der Voreinspritzung zugemessen wird, verkleinert wird.

Sind die Partikelemissionen zu hoch und die Stickoxidemissionen in Ordnung, so ist insbesondere vorgesehen, dass die Abgasrückführrate ARFR verringert und/oder die Kraftstoffmenge PI bei der Voreinspritzung verkleinert wird.

Sind sowohl die Stickoxid- als auch die Partikelemissionen zu hoch, so ist von einem Fehler bzw. von einem Defekt der Steuerung 180, 240 auszugehen. Dies wird dem Fahrer gemeldet, damit dieser eine Werkstatt aufsuchen kann.

Neben diesen Maßnahmen können noch weitere Maßnahmen vorgesehen sein. So kann vorgesehen sein, dass an Stelle der Abgasrückführrate ARFR alternativ oder zusätzlich die der Brennkraftmaschine 100 zugeführten Luftmenge beeinflusst wird. Ferner ist es vorteilhaft, dass neben dem Beginn der wenigstens einen Haupteinspritzung auch die Dauer der Haupteinspritzung und/oder die bei einer wenigstens einer Voreinspritzung und/oder die bei wenigstens einer Nacheinspritzung zugemessene Kraftstoffmenge beeinflusst wird.

## Patentansprüche

1. Verfahren zur Steuerung einer Brennkraftmaschine (100), wobei wenigstens eine Emission der Brennkraftmaschine (100) im Abgas der Brennkraftmaschine (100) erfasst wird, und abhängig von dem Vergleich der erfassten Emission mit einem Sollwert (SP, SN) eine für die Verbrennung in der Brennkraftmaschine (100) beeinflussende Stellgröße korrigiert wird.

2. Verfahren nach Anspruch 1, **dadurch gekennzeichnet, dass** die Stellgröße die Luftzufuhr und/oder die Kraftstoffzumessung zur Brennkraftmaschine (100) beeinflusst.

3. Verfahren nach Anspruch 1 oder 2, **dadurch gekennzeichnet, dass** die Stellgröße die Abgasrückführrate (ARFR) und/oder die der Brennkraftmaschine (100) zugeführten Luftmenge beeinflusst.

4. Verfahren nach Anspruch 2 oder 1, **dadurch gekennzeichnet, dass** die Stellgröße den Beginn und/oder die Dauer wenigstens einer Haupteinspritzung und/oder die bei wenigstens einer Voreinspritzung und/oder die bei wenigstens einer Nacheinspritzung zugemessene Kraftstoffmenge beeinflusst.

5. Verfahren nach einem der vorhergehenden Ansprüche, **dadurch gekennzeichnet, dass** als Emissionen die Partikel-Konzentration und/oder die Stickoxid-Konzentration im Abgas erfasst werden.

6. Verfahren nach einem der vorhergehenden Ansprüche, **dadurch gekennzeichnet, dass** der Sollwert (SP, SN) abhängig von der Drehzahl (N), dem Beginn der wenigstens einen Haupteinspritzung, der Haupteinspritzmenge, der Voreinspritzmenge und/oder der Nacheinspritzmenge vorgebbar ist.

7. Verfahren nach einem der vorhergehenden Ansprüche, **dadurch gekennzeichnet, dass** die Stellgröße abhängig von Betriebskenngrößen in einem Kennfeld (KF) abgelegt ist, wobei die Kennfeldwerte überschreibbar sind.

8. Verfahren nach einem der vorhergehenden Ansprüche, **dadurch gekennzeichnet, dass** die Stellgröße von einer Regelung (210) und/oder einer Steuerung (240) vorgebbar ist, wobei die Ausgangsgröße der Regelung (210) und/oder der Steuerung (240) korrigiert wird.

9. Verfahren nach einem der vorhergehenden Ansprüche, **dadurch gekennzeichnet, dass** die wenigstens eine Emission einer mehrzylindrigen Brennkraftmaschine (100) im Abgas der Brennkraftmaschine (100) zylinderspezifisch erfasst wird und abhängig von dem Vergleich der erfassten Emission mit dem Sollwert (SP, SN) eine für die Verbrennung in der Brennkraftmaschine (100) beeinflussende Stellgröße für jeden Zylinder der Brennkraftmaschine (100) korrigiert wird.

10. Vorrichtung zur Steuerung einer Brennkraftmaschine (100), mit wenigstens einem Sensor (140, 145) zur Erfassung wenigstens einer Emission der Brennkraftmaschine (100) im Abgas, und mit Mitteln, die abhängig von dem Vergleich der erfassten Emission mit einem Sollwert (SP, SN) eine für die Verbrennung in der Brennkraftmaschine (100) beeinflussende Stellgröße korrigieren.
